# EUROPEAN PATENT SPECIFICATION

(11) **EP 2 076 826 B1**
(45) Date of publication and mention of the grant of the patent: **14.11.2012**
(21) Application number: 07872570.2
(22) Date of filing: 18.07.2007
(51) Int. Cl.: G05D 1/00

(54) **AIRCRAFT WAKE VORTEX PREDICTOR AND VISUALIZER**
GERÄT FÜR FLUGZEUGE ZUR VORHERSAGE UND VISUALISIERUNG VON WIRBELSCHLEPPEN
DISPOSITIF DE PRÉDICTION ET DE VISUALISATION D'UNE TURBULENCE DE SILLAGE D'UN AVION

(30) Priority: 10.08.2006 US 463685; 27.12.2006 US 647063
(43) Date of publication of application: 08.07.2009
(73) Proprietor: The Boeing Company, Chicago, IL 60606-2016 (US)
(72) Inventor: MESEROLE, Jere, S., Bellevue, WA 98006 (US); PEARLMAN, Jay, S., Port Angeles, WA 98362 (US); LEWIS, Michael, S., Round Hill, VA 20141 (US); SINGLETON, Marissa, K., Bellevue, WA 98006 (US)
(74) Representative: McLeish, Nicholas Alistair Maxwell
(86) International application number: PCT/US2007/016394
(87) International publication number: WO 2008/094192

(56) References cited:
- DE-A1- 10 039 109
- US-A1- 2003 222 795
- US-A1- 2006 244 637
- US-B1- 7 017 862
- CHOROBA P ET AL: "The concept of integrated air traffic control wake vortex safety and capacity system" INTELLIGENT TRANSPORTATION SYSTEMS, 2003. PROCEEDINGS. 2003 IEEE OCT. 12-15, 2003, PISCATAWAY, NJ, USA,IEEE, vol. 1, 12 October 2003 (2003-10-12), pages 684-688, XP010673603 ISBN: 978-0-7803-8125-4

## Description

The present invention relates to detecting and predicting aircraft vortexes and more particularly to an aircraft wake vortex predictor and visualizer.

Air traffic continues to grow and the capacity limitations at airports are inducing increasing flight delays. The capacity limitations come, in part, from wake turbulence created by aircraft, which limits how closely aircraft can be spaced on both takeoff and landing. These limitations apply to both single runway operations and parallel runway operations. Typically, for example, aircraft takeoffs and landing can be spaced by up to three minutes, depending on how much smaller the following aircraft is than the leading one, to allow turbulence to move off the runway and flight path, or to dissipate.

Wake turbulence is generated in the form of vortexes trailing from aircraft wingtips. The pair of vortexes created by each aircraft is a result of lift being generated by the wings and air rotating around the wing tip from the high pressure regions at the bottom of the wing to the lower pressure regions on the top of the wing. The strength of the vortexes is dependent on the aircraft speed and configuration and on the instantaneous lift being generated by the wing. While there are ways to reduce the strength of tip vortexes, they cannot be eliminated. The vortexes can severely buffet another aircraft that flies into them, and the vortexes from a transport aircraft flying at landing or take-off speeds can upend a small aircraft and cause loss of control.

Wing tip vortexes cannot be directly visualized at low altitudes, except in rare atmospheric conditions. In research experiments, wake turbulence has been measured with sophisticated and costly laser Doppler devices positioned along the flight path. The lasers may be aimed across the flight path and detect the characteristic approaching and receding air motions of the vortex. Such equipment, however, does not operate in all weather conditions and may be too costly for routine airport operations, and aircraft takeoff and landing separations are established with the assumption of worst conditions. This may apply not only to single runways but also to dual approach paths to parallel runways significantly less than a mile apart. These minimum separations are often greater than what would be adequate for complete safety if the location and movement of the vortexes were known with certainty so that they could be avoided with minor changes in flight path.

DE 100 39 109 describes a method of determining the disturbing influence of a vortex wake created by a first aircraft on a second aircraft using air data measurements as well as weather data from ground and flight measurements.

US 7017 862 describes a wake vortex visualizer for an aircraft in which a smoke trail is emitted from a wing tip to allow another aircraft to avoid the generated vortex.

US 2006/0244637 describes a method of preventing an aircraft penetrating into a trailing vortex area of a vortex generator.

### SUMMARY OF THE INVENTION

In accordance with an aspect of the present invention there is provided a method and aircraft according to the accompanying claims.

A method to predict a location, intensity and movement of wake vortexes may include collecting one or more ground-based measurements related to predicting the location, intensity and movement of wake vortexes. The method may also include collecting one or more airborne-based measurements related to predicting the location, intensity and movement of wake vortexes. The method may further include integrating multiple ground-based and/or airborne-based measurements to predict the location, intensity and movement of wake vortexes using a wake vortex prediction model selected from a plurality of wake vortex models based on a group of inputs or parameters that may include the ground-based and airborne-based measurements.

A method to adjust air traffic management system plans may include aggregating wake vortex information, determining vehicle deconfliction information, and determining air traffic management operational state information. The method may also include integrating the wake vortex information, vehicle deconfliction information and air traffic management operational state information to adjust air traffic management system plans to reflect any changes due to wake-dependent aircraft separation requirements.

A system to predict a location, intensity and movement of wake vortexes may include a plurality of ground-based sensors to collect data related to predicting the location, intensity and movement of wake vortexes. The system may also include an information management system in conjunction with a telecommunications network to receive airborne-based measurement data related to predicting the location, intensity and movement of wake vortexes and to receive the data from the plurality of ground-based sensors. The method may further include a wake vortex prediction model to predict at least the location and intensity of the wake vortexes from at least status information from an aircraft generating the wake vortexes.

A system to adjust air traffic management system plans may include wake vortex detection and prediction means to aggregate wake vortex detection and prediction information. The system may also include vehicle deconfliction means that generate vehicle deconfliction information. The system may further include an operations decision process to couple the wake vortex detection and prediction information, vehicle confliction information and air traffic management operational state information to adjust air traffic management system plans in real-time to reflect any changes due to wake vortex-dependent aircraft separation requirements.

An aircraft may include a plurality of sensors to determine at least a speed of the aircraft and a configuration of the aircraft and a wake vortex predictor to predict at least a location and intensity of wake vortexes being generated by the aircraft based at least on the speed and configuration of the aircraft. The aircraft may also include a transmitter to transmit wake vortex information corresponding to at least the predicted location and intensity of the wake vortexes to at least a following aircraft.

A method for identifying aircraft vortical flows includes directing a tracer from a first aircraft into a vortical flow generated by the first aircraft, and detecting a characteristic corresponding to the presence of the tracer directed into the vertical flow. The method can further include, based at least in part on the detected characteristic, directing the flight of the first aircraft, or a second aircraft following the first aircraft, or both. For example, the method can include controlling a separation distance between the first aircraft and the second aircraft, and/or directing the second aircraft away from the vortical flow.

The tracer can include a gas (e.g., a gas that is lighter than air) so that the tracer tends to move to the center of the vortex. In other embodiments, the gas can be contained in envelopes (e.g., small balloons). In still further embodiments, the tracer can include chaff or other solid objects deployed from the aircraft. In yet further embodiments, the tracer can include energy. For example, the tracer can include energy that is directed into the air entrained in the vortical flow so as to ionize air molecules in the vortical flow. The ionized air molecules are detectable and distinguishable from the surrounding non-ionized air molecules, e.g., via radar. In other embodiments, directing energy into the vortical flow can include changing other characteristics of the air molecules. For example, the directed energy can increase the electronic state of an air molecule, and the energy emitted by the molecule as it returns to its initial energy state can then be detected. In any of the foregoing embodiments, the tracer can be directed in a time-varying manner to distinguish the tracer from its environment.

A method for identifying aircraft vortical flows in association with another aspect of the present invention includes generating a vortical flow in air adjacent to an aircraft by moving the aircraft relative to the adjacent air, and directing a tracer from the aircraft into the vortical flow. The tracer is visually indistinguishable from its surroundings to an unaided observer on the ground or in a following aircraft while the tracer is in the vortical flow.

A method in accordance with another aspect includes detecting a characteristic correlated with the presence of a tracer directed from an aircraft into vortical flow in air adjacent to the aircraft as the aircraft moves relative to the adjacent air. The tracer is visually indistinguishable from its surroundings to an unaided observer on the ground or in a following aircraft while the tracer is in the vortical flow. The method can further include generating a signal in response to detecting the presence of the tracer.

In further particular aspects, the method can further include controlling a separation distance between a first aircraft (from which the tracer is directed) and a second aircraft following the first aircraft, or directing the second aircraft away from the vortical flow, or both controlling the separation distance and directing the second aircraft away from the vortical flow, based at least in part on the generated signal. The characteristic correlated with the tracer can be detected from the ground or from another aircraft. In further embodiments, energy can be added to the tracer and the method can further include detecting energy emitted by the tracer.

Still another aspect is directed to an aircraft that includes a payload volume, a lifting surface positioned to generate lift and an associated vortical flow, and an onboard vortical flow tracer system that includes a tracer director positioned to direct a tracer into vortical flow generated by lifting surface, with the tracer being visually indistinguishable from its surroundings to an unaided observer on the ground or in a following aircraft while the tracer is in the vortical flow. The vortical flow tracer system can further include a controller operatively coupled to the tracer director to selectively activate the tracer director.

Still another aspect is directed to a system for identifying vortical flow, which includes a ground-based detector having a detection vector aligned axially with an active runway final approach/departure axis. A controller is operatively coupled to the detector, and an output device is operatively coupled to the detector to provide an indication when the detector identifies a characteristic associated with a tracer in a vortical flow. In particular embodiments, the detector can include at least one of a radio signal detector, a radar detector, a lidar detector, or an optical detector.

Other aspects and features of the present invention, as defined solely by the claims, will become apparent to those ordinarily skilled in the art upon review of the following non-limited detailed description of the invention in conjunction with the accompanying figures.

### BRIEF DESCRIPTION OF THE DRAWINGS

Figure 1 is a flow chart of an exemplary method to predict and display a location, intensity and movement of wake vortexes in accordance with an embodiment of the present invention.
Figure 2 is an illustration of a system to predict and display a location, intensity and movement of wake vortexes in accordance with an embodiment of the present invention.
Figure 3A is a block diagram of an exemplary wake vortex system illustrating various data inputs or sources and output information and users relative to an air traffic management system operational change in accordance with another embodiment of the present invention.
Figure 3B is a block diagram of the exemplary wake vortex system illustrating various data inputs and sources and outputs relative to flight operations effects in accordance with an embodiment of the present invention.
Figure 4 is a schematic illustration of a system for directing tracers into aircraft vortical flows, detecting the tracers, and providing an associated feedback.
Figure 5 is a partially schematic illustration of an aircraft having tracer directors configured in accordance with several embodiments of the invention.
Figure 6 is an enlarged, partially schematic illustration of a wing tip region housing tracer directors in accordance with several embodiments of the invention.
Figure 7 is an enlarged illustration of a portion of an aircraft wing tip housing a tracer director that directs energy into a vortical flow in accordance with an embodiment of the invention.
Figure 8 is a flow diagram illustrating a process for directing tracers from an aircraft into a vortical flow generated by the aircraft.
Figure 9 is a flow diagram illustrating a process for detecting a characteristic associated with the presence of tracers directed from an aircraft into its vortical flow.
Figure 10 is a partially schematic top view of an aircraft approaching a ground-based tracer detector positioned and configured in accordance with an embodiment of the invention.

### DETAILED DESCRIPTION OF THE INVENTION

The following detailed description of embodiments refers to the accompanying drawings, which illustrate specific embodiments of the invention. Other embodiments having different structures and operations do not depart from the scope of the present invention.

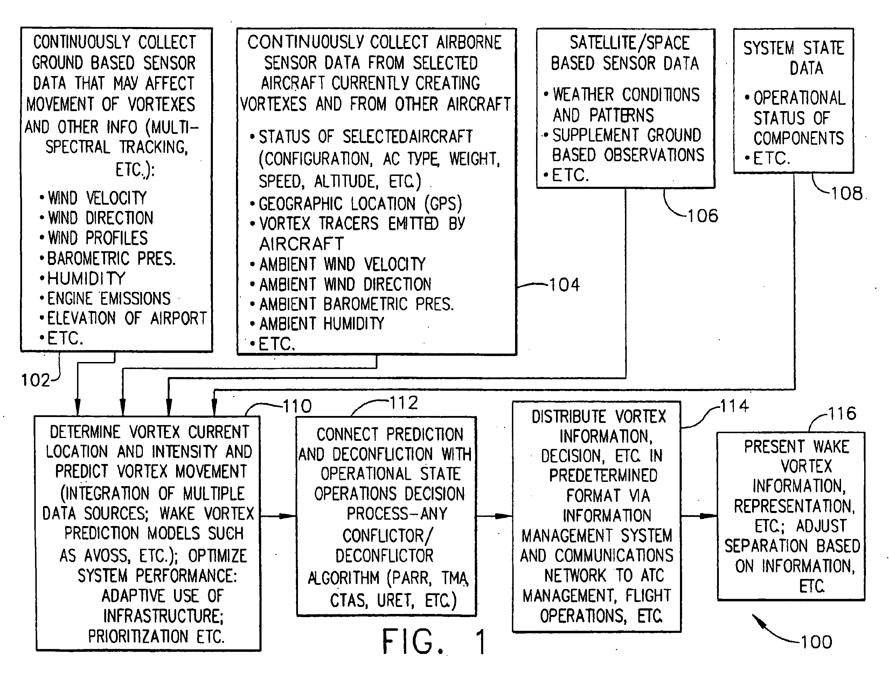

Figure 1 is a flow chart of an exemplary method 100 to predict and display a location, intensity and movement of wake vortexes in accordance with an embodiment of the present invention. In block 102, ground-based sensor data that may affect movement of vortexes may be collected or measured. The data may be collected or measured continuously or at a predetermined frequency to conserve bandwidth and optimize system performance under some operational conditions as described in more detail herein. Examples of the data that may be collected may include, but is not necessarily limited to wind velocity, wind direction, wind profiles, barometric pressure, humidity, engine emissions, elevation of the airport and any other atmospheric or environmental data or information that may be used to detect and predict a location, intensity and movement of wake votexes.

In block 104, airborne sensor data may be collected. The data may be collected from a selected aircraft that is generating the wake vortexes and from other aircraft. The airborne data may also be collected continuously or at a predetermined frequency to preserve bandwidth and optimize system performance depending upon conditions and operational limitations. Examples of the airborne data or information that may be collected or determined may include, but is not necessarily limited to status of a selected aircraft that may be creating or generating the wake vortexes, geographic location, ambient wind velocity, ambient wind direction, ambient barometric pressure, ambient humidity and the like.

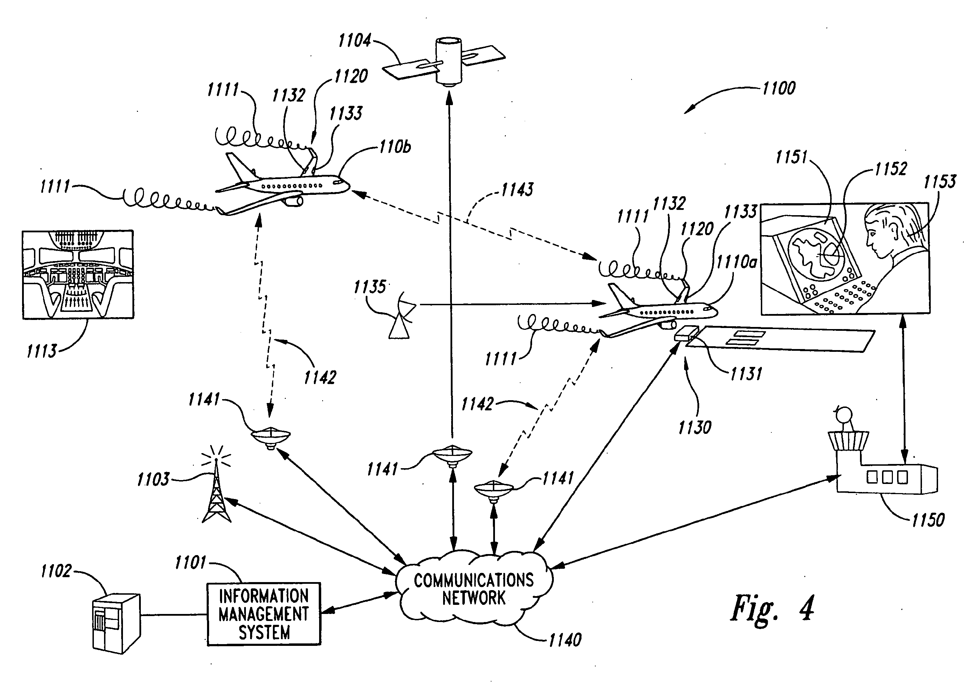

Other data may involve vortex tracers that may be emitted by a vortex tracer system mounted in the aircraft for real-time vortex detection. Such a system would emit a material or substance from the aircraft that enhances the ability of particular ground-or airborne-based sensors to detect and locate the wake vortexes generated by the aircraft. Predictor or state information may be used to aim the tracer detection system to optimize vortex detection. Preferred embodiments for tracing aircraft vortexes are described below with reference to Figures 4-10.

Examples of parameters that define the status of a selected aircraft of interest because the aircraft is generating vortexes that may affect other aircraft may include, but may not be limited to aircraft configuration (takeoff, landing or cruise flap settings, wheels down/up, etc.), aircraft type, weight, air speed, altitude and the like. Aircraft geographic location may be determined or measured by a Global Positioning System (GPS), inertial navigation or other system or technique.

In block 106, satellite or space based sensor data may be collected. The space based sensor data may include among other information, weather conditions and patterns. The space based sensor data may supplement the ground-based observations or other observations. In block 108, system state data or operational state information may be gathered or collected. The system state data may include operational status of the different components or elements of the system, which airport runways are in use, directions of approach and departure and the like. System state data may also include amount of air traffic congestion, measured in traffic volume and delays, wind and weather parameters that may affect movement and dissipation of wake vortexes as well as other parameters.

In block 110, vortex current location and intensity may be determined and vortex movement may be predicted. Data from the multiple sources may be integrated using technology such as System Wide Information Management (SWIM) or the like that may allow data to be read across all sources and provided by multiple different users and applications. SWIM or the like may provide portability, readability and timeliness to insure quality of the service.

Wake vortex prediction models, such as NASA Aircraft Vortex Spacing System (AVOSS) or similar prediction models may be used to predict the wake vortexes, their location, movement and intensity.

Because of the volume of data that may be received and used under some circumstances, bandwidth options may be implemented to optimize system performance. One example of such options or techniques may include adaptive use of infrastructure, such as sending more data and cycling more frequently only if needed depending upon circumstances. Another example may be an infrastructure priority/utilization option. With this option, when data are not needed, they are not sent or used, but when needed, lower priority applications or data may be overwritten or not used.

In block 112, wake vortex prediction elements or information, vehicle deconfliction elements or information and air traffic operational state information may be coupled, connected or combined to adjust air traffic management system plans in real-time to reflect any changes due to wake vortex-dependent aircraft separation requirements. The system may use any predictor/conflictor algorithms, including AVOSS, as previously discussed, and planning/deconfliction tools, such as radar, Problem Analysis, Resolution and Ranking (PARR), Enroute Descent Advisor (EDA), Traffic Management Advisor (TMA), Center-TRACON Automation System (CTAS), User Request Evaluation Tool (URET) or similar tools. Vehicle deconfliction is the process of determining the proper instructions to give to aircraft to ensure that they never come too close to one another (the limit today in the area of airports is 3 miles).

Vehicle deconfliction elements may include automation software that predicts the future positions of aircraft and then optimally determines changes to the aircraft flight paths necessary to maintain a mandatory minimum separation. Vehicle deconfliction may also include an air traffic controller, who projects ahead based on the radar display and then gives "vectors" to pilots, for them to change course.

Air traffic operational state information may include runways that may be in use at an airport, the direction of approach, and the particular approach path, which may be selected because of weather conditions at the time, especially wind direction. Air traffic operational state information may also include the amount of congestion, measured in traffic volume and delays. In accordance with an embodiment of the present invention, another relevant parameter may be the weather, wind speed and direction and how this may affect movement and dissipation of the wake vortexes.

In block 114, wake vortex information, decisions or other data may be distributed in a predetermined format via an information management system and communications or telecommunications network to predetermined entities, such as air traffic control (ATC), flight operations, individual aircraft, airlines, military or the other entities having a need or use for the information or data. The information may be sent in different formats to the different entities to facilitate their respective uses. The information may be distributed over the same information management system and communications network used to receive data from the various sources as described above.

In block 116, wake vortex information, a wake vortex representation, visualization or the like may be presented to the respective users. As previously discussed, the wake vortex information or visualization may be used to adjust separation between aircraft and increase the frequency of takeoffs and landings. The visualization may be an overlay on a radar screen or other display.

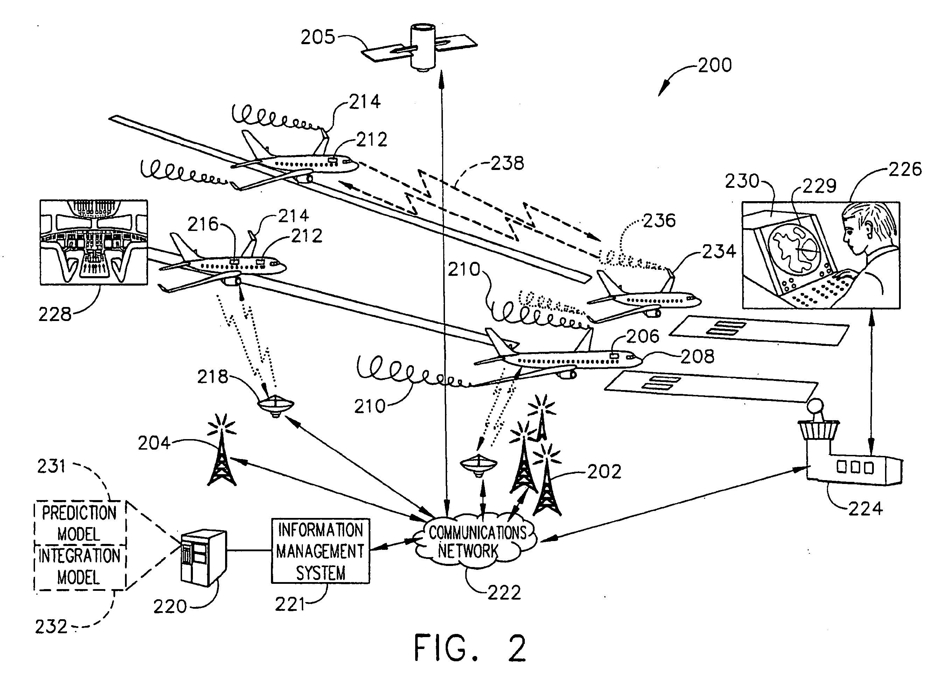

Figure 2 is an illustration of a system 200 to predict and display a location, intensity and movement of wake vortexes in accordance with an embodiment of the present invention. The method 100 may be embodied in the system 200. The system 200 may include a plurality of ground-based sensors. For example, there may be multi-spectral tracking sensors 202 to detect aircraft engine emissions, air pressure changes and the like to locate wake vortexes. The system may also include area weather sensors 204 to detect weather conditions, such as wind velocity and direction, air temperature, barometric pressure, humidity and any other atmospheric or environmental conditions that may be applicable to detecting and predicting wake vortex location, intensity and movement.

The system 200 may also include space-based sensors 205. The space-based sensors 205 may include multi-spectral sensors to supplement ground-based sensors 202 and 204. The space-based sensors may detect weather conditions or weather patterns or gather other information that may be useful in detecting and predicting the location, intensity and movement of wake vortexes.

The system may also include airborne sensors 206 to provide data from a selected aircraft 208 generating wake vortexes 210. The airborne sensors may also include sensors 212 on other aircraft 214 to provide information or data that may be used in detecting and predicting wake vortex location, intensity and movement. As previously discussed, data from the selected aircraft 208 generating the wake vortexes 210 may include data related to a status of the aircraft, such as configuration, aircraft type, weight, speed, altitude, geographic location and any other information that may be used in determining or predicting the wake vortex location, intensity and movement from the selected aircraft 208. The selected aircraft 208 may also have sensors 206 to sense atmospheric conditions.

The sensors 212 on another aircraft 214 may measure or collect similar data. The other aircraft 214 may include a prediction model 216 to compute or predict wake vortexes from data received from a ground station 218 or may receive the vortex predictions calculated or determined from a ground-based processing system 220. The ground-based processing system 220 may receive the ground-based data and airborne-based data through an information management system 221 operating in conjunction with a telecommunications network 222 or other communications network. Wake vortex predictions, analysis and other results may also be distributed to aircraft, air traffic services (ATS) facilities 224, and other users using the same information system 221 and telecommunications network 222. The network 222 may include elements for air-to-ground communication, air-to-air communication, communication with satellites 205, wireless and wire line communications.

A representation 226 of the location, intensity, and movement of the wake vortexes relative to any geographical landmarks and other aircraft may be presented to air traffic controllers at the ATS facilities 224, may be presented to pilots on a flight deck display 228 of an aircraft, and to others. The representation may be an electronic overlay 229 on an air traffic display 230 or radar display.

The processing system 220 may be considered as an additional element operating in conjunction with the information system and telecommunications network 222. The processing system 220 may include a prediction model 231 and an integration model 232. The prediction model 231 or wake vortex prediction model may predict at least the location and intensity of the wake vortexes 210 from at least the status information from the selected aircraft 208 generating the wake vortexes 210. The integration model 232 may determine the location, intensity and movement of the wake vortexes based on a combination of the data collected by the sensors and data from the wake vortex prediction model 231.

The system 200 may also include a vortex tracer system 234 or the like that emits a material or substance 236 from an aircraft that enhances the ability of particular ground- or airborne-based sensors to detect and locate the vortexes generated by the aircraft. Aircraft may also share information via air-to-air communications 238 for real-time vortex prediction and detection.

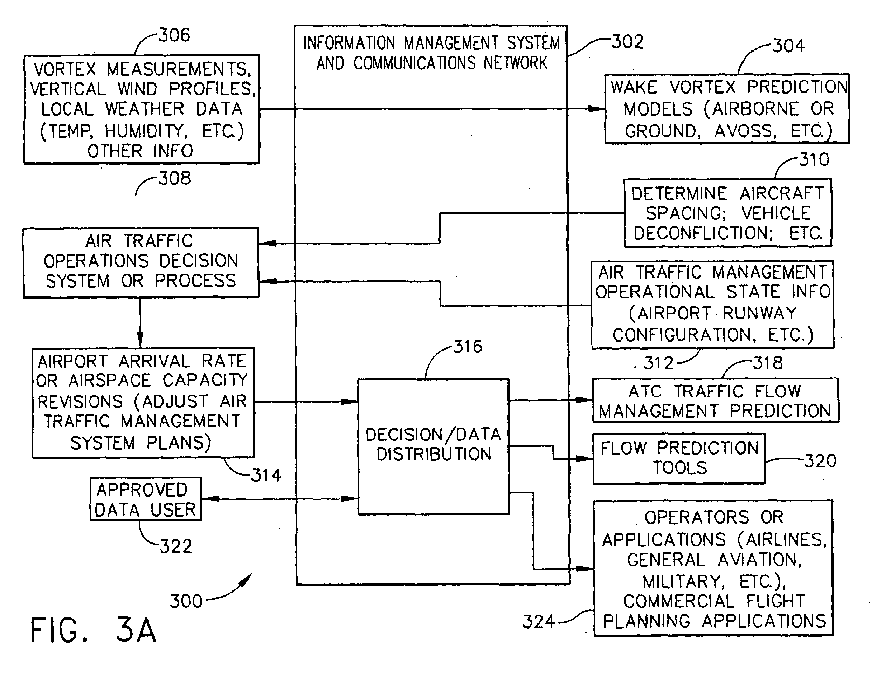

Figure 3A is a block diagram of an exemplary wake vortex system 300 illustrating various data inputs or sources and output information relative to an air traffic management system operational change in accordance with another embodiment of the present invention. The system 300 may be an information management system or the like. Elements of the system 300 may be embodied in the system 200 of Figure 2. The system 300 may include an information management system and telecommunications network 302. The information management system and communications network 302 may be used for the information management system 221 and network 222 and processing system 220 of system 200. The network 302 may provide data to wake vortex prediction models 304. The models 304 may reside at a ground station similar to prediction model 231 in Figure 2 or may be airborne similar to model 216 of Figure 2. The wake prediction models 304 may be NASA AVOSS type models or the like similar to that previously discussed. The vortex model may receive ground-based and airborne-based sensor data 306 that may include aircraft state data, vortex location indicated by sensor measurements, vertical wind profiles, local weather data and other information that may be useful in predicting wake vortexes. A particular wake vortex prediction model may be selected from a plurality of wake vortex models based on the inputs or parameters.

The system 300 may also include an air traffic operations decision system or process 308. The air traffic operations decision system or process 308 may also receive data through the network 302. Wake vortex prediction information from block 304, vehicle deconfliction information 310, and air traffic management operational state information 312 may be coupled or combined by the air traffic operations decision system 308 to adjust air traffic management system plans in real-time to reflect any changes due to wake vortex-dependent aircraft separation requirements. The adjustment to air traffic management system plans may result in airport arrival rate or airspace capacity revisions 314.

In block 316, the decisions relative to adjustment to the air traffic management system plans and other data may be distributed via the network 302. The decision/data may be sent to ATC traffic flow management prediction 318 and to air traffic flow prediction tools 320 for additional analysis and review. The data may also be sent to approved data users 322 and operators or applications 324, such as airlines, general aviation, military or others for flight plan applications or other uses. The system 300 or network 302 may typically only be accessed through a secure interface and on an "as needed" basis. The system 300 allows data to be readable over all sources and to be available to many different applications. The system 300 may also allow portability, readability and timeliness for quality of service.

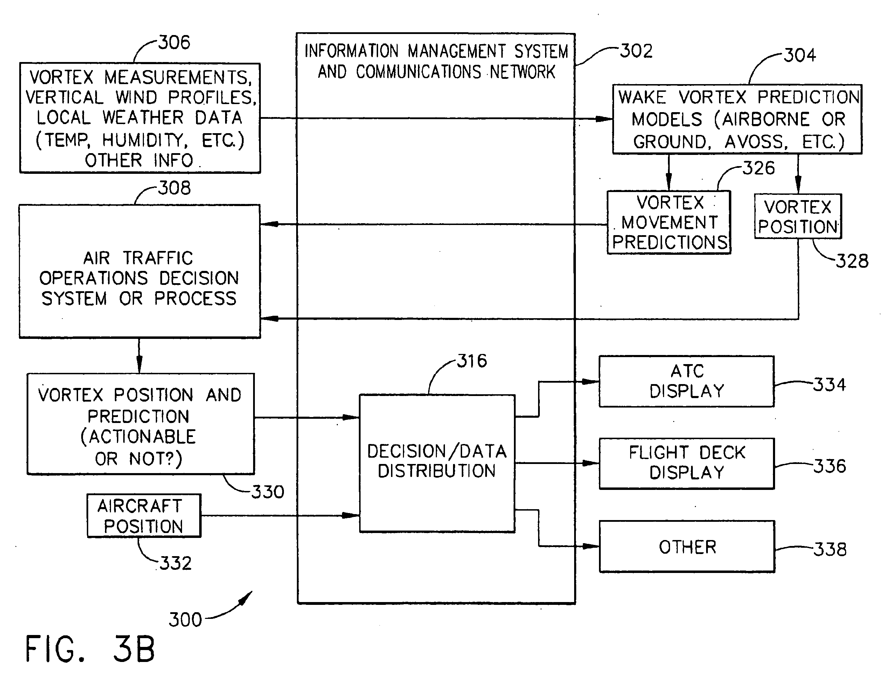

Figure 3B is a block diagram of the exemplary wake vortex system 300 illustrating various data inputs and sources and outputs relative to flight operations effects in accordance with another embodiment of the present invention. Similar to that described in Figure 3A, the wake vortex prediction models 304 may receive as inputs from ground and airborne sensors or from other sources, such as aircraft state data, vortex location indicated by sensor measurements, vertical wind profiles, local weather data or other information that may be useful in predicting location and movement of wake vortexes, as represented by block 306. A particular wake vortex model may be selected from a plurality of wake vortex models based on the inputs or parameters 306. The selected wake vortex model 304 may provide vortex movement predictions 326 and vortex position or location 328.

The vortex movement predictions 326 and vortex position 328 may be applied to the air traffic operations decision system or process 308 to determine whether the vortex position and movement prediction warrants taking action in block 330, such as making adjustments to aircraft spacing as previously described or other actions. Any decision and the vortex location and movement prediction data or information may be distributed via the network 302 in block 316. Aircraft position information may be integrated with the vortex information in block 316. The vortex information may then be distributed for presentation or display to Air Traffic Control (ATC) 334, aircraft that may be affected by the wake vortexes and presented on a flight deck display 336 and any other recipients, such as the Federal Aviation Administration (FAA) or other entities for review and analysis or for other purposes.

Several embodiments of the invention as described may take the form of computer-executable instructions, including routines executed by a programmable computer. Those skilled in the relevant art will appreciate that the invention can be practiced on computer systems other than those shown and described herein. The invention can be embodied in a special-purpose computer or data processor that is specifically programmed, configured or constructed to perform one or more of the computer-executable instructions described below. Accordingly, the term "computer" as generally used herein refers to any data processor and can include Internet appliances and hand-held devices (including palm-top computers, wearable computers, cellular or mobile phones, multi-processor systems, processor-based or programmable consumer electronics, network computers, mini-computers and the like). Information handled by these computers can be presented at any suitable display medium, including a CRT display or LCD.

The invention can also be practiced in distributed environments, where tasks or modules are performed by remote processing devices that are linked through a communication network. In a distributed computing environment, program modules or subroutines may be located in local and remote memory storage devices. Aspects of the invention described below may be stored or distributed on computer-readable media, including magnetic or optical readable or removable computer disks, as well as distributed electronically over networks. Data structures and transmissions of data particular to aspects of the invention are also encompassed within the scope of the invention.

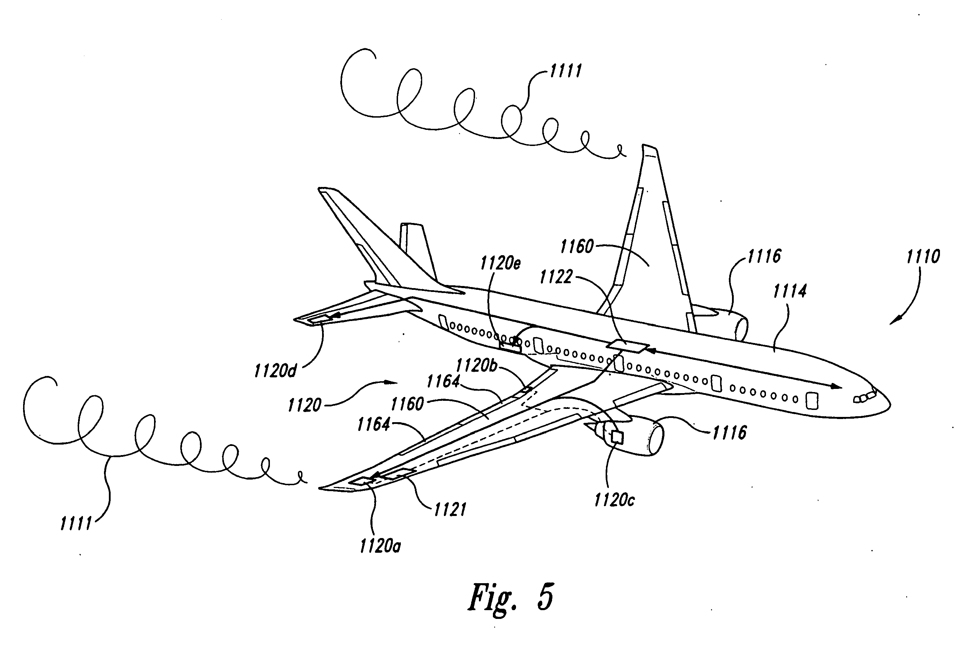

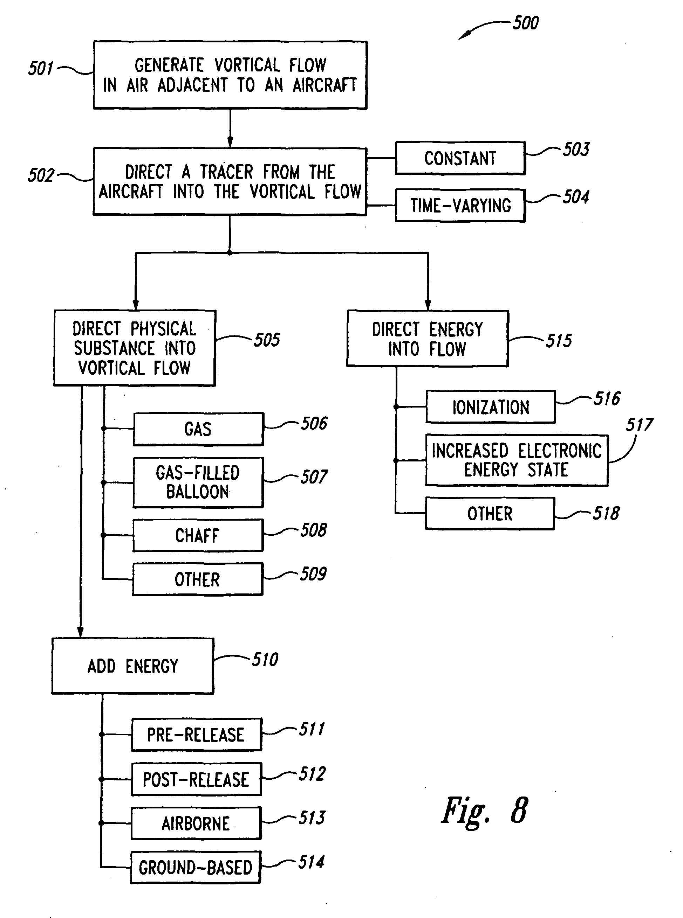

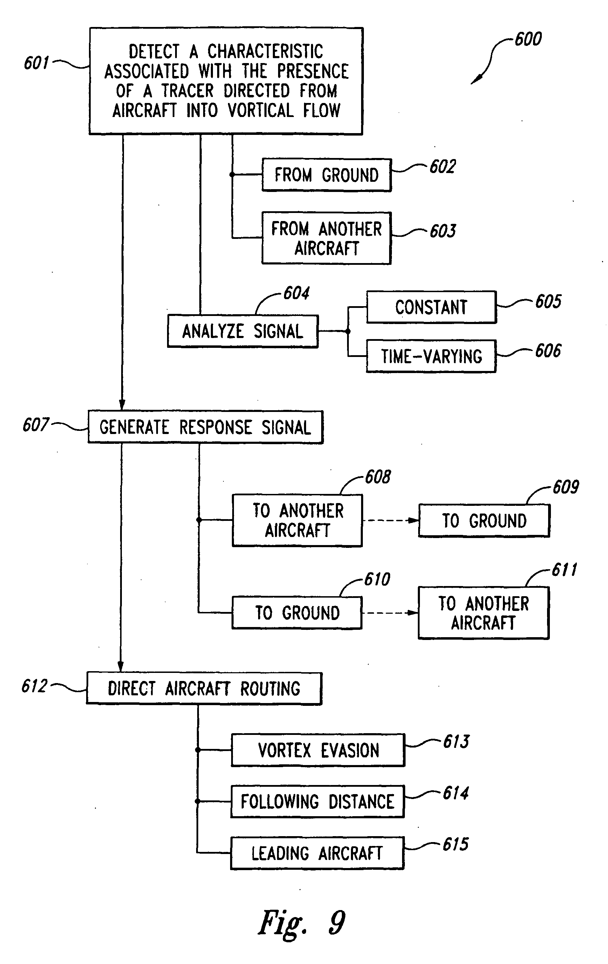

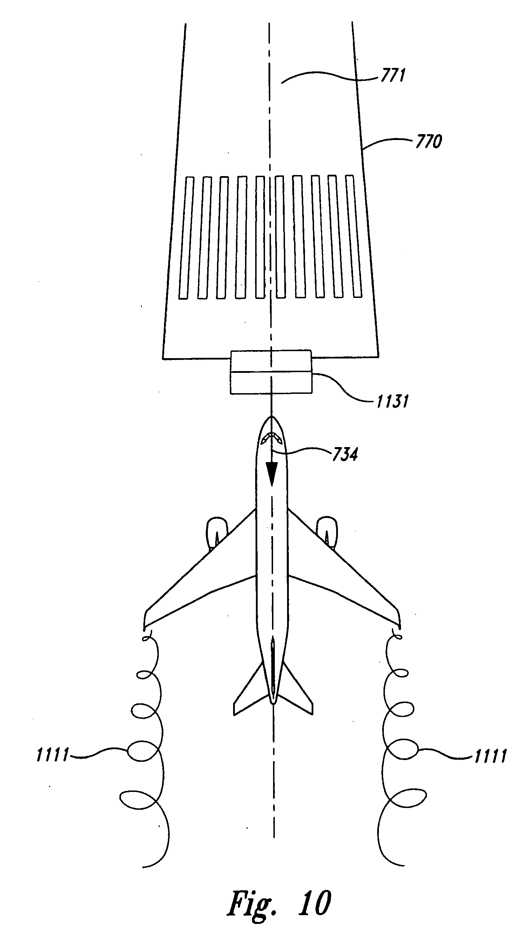

Figure 4 is a schematic illustration of a system 1100 for directing tracers into aircraft vortical flows, and detecting characteristics associated with the presence of the tracers in the vortical flows. This system 1100 generally include a tracer director 1120 carried by an aircraft, and a tracer detector 1130, portions of which may be carried by one or more aircraft, and other portions of which may be ground-based. Aspects of the overall system are described below with reference to Figure 4. Aspects of particular embodiments of the tracer directors 1120 are then described with reference to Figures 5-7. The operation of the tracer directors and detectors are described with reference to flow diagrams shown in Figures 8 and 9, respectively, and Figure 10 illustrates a tracer detector configured in accordance with a particular embodiment of the invention.

By operating the tracer director and tracer detector in accordance with particular embodiments of the invention, operators can more accurately identify the location of aircraft vortexes and can direct following aircraft (and/or other aircraft) in accordance with this information. As a result, aircraft controllers can space aircraft according to actual vortex data, which is expected to reduce aircraft following distances when compared with traditional techniques that often assume vortex conditions more severe than they actually are.

The tracer directors 1120 can be carried by one or more aircraft 1110, shown in Figure 4 as a first or leading aircraft 1110a and a second or following aircraft 1110b. The tracer directors 1120 direct a tracer into the aircraft wake vortexes 1111 generated by the aircraft 1110a, 1110b, where characteristics associated with the tracers can be detected by the tracer detector 1130. Optionally, the characteristics can be made more detectable to the tracer detector 1130 by energy directed into the vortexes from an aircraft-based source or a ground-based source 1135. The information obtained by the tracer detector 1130 corresponds to the location of the vortexes 1111. The tracer detector 1130 can include one or more detector elements, for example, a ground-based detector 1131 and/or one or more airborne detectors. The airborne detectors can include a first airborne detector 1132 positioned to detect the presence of the vortex 1111 generated by the aircraft in which it is housed. Accordingly, the first airborne detector 1132 on the leading aircraft 1110a can be positioned to detect the vortex 1111 generated by the leading aircraft 1110a. This information may be useful as a diagnostic tool (e.g., to verify the operational state of the tracer director 1120), and/or to provide information about the location of the vortex 1111. The system 1100 can also include a second airborne detector 1133 positioned to detect the vortexes of another aircraft. For example, the second airborne detector 1133 on the following aircraft 1110b can be positioned to detect the vortex 1111 generated by the leading aircraft 1110a.

The information generated by the tracer detector 1130 can be provided to a communication network 1140 for distribution to other components of the overall system 1100, as appropriate. Accordingly, the communication network 1140 can include ground stations 1141 that support air-to-ground links 1142 with the aircraft 1110a, 1110b. The ground stations 1141 can also communicate with overhead satellites 1104 which may provide additional information. Still further information may be provided by weather sensors 1103 and the ground-based detector 1131. An information management system 1101 controls and manages the information provided to the communications network 1140 via a processor 1102 or other suitable device. In particular instances, the processor 1102 may also house predictive tools, such as those previously described. Predictions carried out by these tools may be compared with actual data received by the tracer detector 1130.

The communications network 1140 can route the information received from the tracer detector 1130 to the appropriate locations. One such location includes an air traffic services (ATS) facility 1150, at which air traffic controllers view an air traffic display 1151. A representation 1152 of the vortexes detected by the tracer detector 1130 can be overlaid on the air traffic display 1151 to aid an air traffic controller 1153 in routing the aircraft within his or her control. In particular, the air traffic controller 1153 can use this information to direct the following aircraft 1110b, which is potentially affected by the vortexes 1111 generated by the leading aircraft 1110a. Information may also be communicated directly to the following aircraft 1110b from the ground stations 1141, or from the leading aircraft 1110a, via an air-to-air link 1143. Accordingly, the operator of the leading aircraft 1110a may have information about the vortexes generated by his or her aircraft, the air traffic controller 1153 can receive and act upon this information, and the operator of the following aircraft 1110b can also receive and act upon this information, either directly, or with the assistance of the air traffic controller 1153.

Figure 5 is a partially schematic, isometric illustration of a representative aircraft 1110 (e.g., a commercial passenger and/or cargo transport aircraft) carrying several tracer directors 1120 (illustrated as tracer directors 1120a-1120e) configured in accordance with several embodiments of the invention. In general, it is expected that a given aircraft 1110 will include only one such tracer director, but for purposes of illustration, several different types of tracer directors are shown on the same aircraft 1110 in Figure 5. In particular embodiments described further below, the aircraft 1110 can include multiple tracer directors.

The aircraft 1110 can include a fuselage 1114, wings 1160, and engines 1116 which provide the main propulsive force for the aircraft 1110. In an embodiment shown in Figure 5, the engines 1116 are carried by the wings 1160, but in other embodiments, the engines 1116 may be carried by the fuselage 1114 or other portions of the aircraft 1110. In a particular embodiment shown in Figure 5, a first tracer director 1120a is housed in one or both of the wings 1160. For purposes of illustration, the first tracer director 1120a is shown housed in only one of the wings 1160. The first tracer director 1120a can be coupled to a reservoir 1121 which carries tracer elements directed into the vortexes 1111 by the first tracer director 1120a, and a controller 1122, which manages the operation of the tracer director(s) 1120. The tracer elements can include any of a wide variety of elements that are detectable by the tracer detector 1130 (Figure 4). In particular embodiments, the tracer elements are visually distinguishable to an unaided observer, and in other embodiments, the tracers are not visually distinguishable from their immediate surroundings by an unaided observer, either on a following aircraft, or on the ground. For example, the tracer elements can include an energized gas, such as ammonia, which is directed from the wing 1160 into the vortex 1111. Further detail of this and other embodiments of the tracers are described in greater detail below with reference to Figure 8.

In other embodiments, the tracer director can be located at portions of the aircraft 1110 other than the wing tip. For example, a representative second tracer director 1120b can be positioned proximate to a flap or other high lift device 1164 of the aircraft 1110. This location may be suitable when it is expected that the strongest and/or most easily detected vortexes generated by the aircraft are those generated by and/or proximate to the high lift devices 1164. In still further embodiments, the tracer detectors can be positioned at other locations on the aircraft. For example, a third tracer director 1120c can be carried by the engine 1116 so as to emit tracers via the engine exhaust stream. This arrangement may be suitable where the engine exhaust stream is expected to be entrained by the aircraft vortexes, for example, vortexes generated by the flaps or other wing high lift devices 1164.

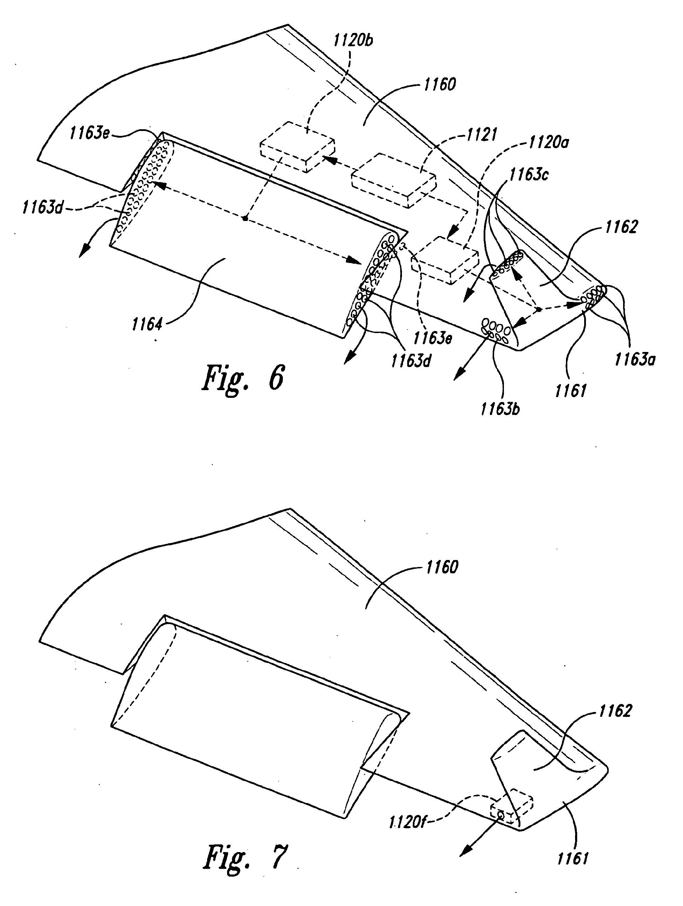

The first, second, and third tracer directors 1120a-1120c described above can be coupled to the reservoir 1121 which delivers physical material to the corresponding tracer director for ejection into the adjacent vortical flow. The material can include a gas, liquid, solid, vapor or mist. In other embodiments, the tracer director can direct energy, rather than physical particles, into the vortical flow. In such cases, the tracer director can have any of the locations described above with reference to the tracer directors 1120a-1120c. Alternatively, the tracer director can direct energy into the vortical flow from a more remote location. For example, fourth and fifth tracer directors 1120d and 1120e can be positioned in the tail and fuselage, respectively of the aircraft 1110 and aimed laterally toward the vortexes 1111. In another embodiment described below with reference to Figure 7, a general similar tracer director can be positioned closer to the wing tip. It is expected that the energy directed into the vortexes 1111 by the tracer directors 1120d, 1120e will be absorbed by molecules in the vortical flow. The absorbed energy can make the molecules more visible e.g., by ionizing the molecules, or when the energy is re-emitted by the molecules (via a change in molecular energy state and/or electronic energy state). In either embodiment, the effect of the energy is to make the vortical flow detectable or more detectable by the tracer detector 1130 (Figure 4).

In a particular embodiment, one or more of the tracer directors 1120a-1120e may be carried by the same aircraft 1110. For example, the aircraft 1110 can include multiple independent or partially independent tracer directors for purposes of redundancy. In other embodiments, the aircraft 1110 can include multiple tracer directors that are configured to work together. For example, the aircraft 1110 can include one tracer director (e.g., one of tracer directors 1120a-1120c) to direct a physical substance into the vortical flow, and another (e.g., one of the tracer directors 1120d-1120e) to add energy to the physical substance and/or the vortical flow generally.

Figure 6 is an enlarged, partially schematic illustration of the wing 1160 shown in Figure 5, along with the first and second tracer directors 1120a, 1120b. The first tracer director 1120a can receive tracer elements from the reservoir 1121 and direct them through any of a variety of delivery apertures 1163. For example, the tracer elements can be directed through one or more delivery apertures 1163a located in a wing tip 1161, one or more delivery apertures 1163b located at the trailing edge of the wing 1160, and/or one or more delivery apertures 1163c located in a winglet 1162 of the wing 1160. The second tracer director 1120b can direct tracer elements through one or more delivery apertures 1163d located at the inboard and/or outboard tips of the wing flap or other high lift device 1164. In another embodiment, delivery apertures 1163e can be positioned in the wing 1160 along the opening into which the high lift device 1164 retracts. The number of delivery apertures 1163a-1163d shown in Figure 6 is representative of particular embodiments. In other embodiments, the number of delivery apertures 1163a-1163d can be smaller (e.g., a single delivery aperture 1163a-1163d for each corresponding location) or greater than the number shown in Figure 6.

Figure 7 is a partially schematic illustration of the wing 1160 with a sixth tracer director 1120f positioned at the wing tip 1161 to direct energy into the adjacent vortical flow. In one embodiment, the sixth tracer director 1120f can include an ionizer that ionizes air molecules proximate to the wing tip 1161. The ionizer can include one or more electrically charged sharp or pointy surfaces that effectively ionize adjacent air molecules. The ionized air molecules are expected to be more highly reflective to radar (or other electromagnetic waves) than are the surrounding non-ionized molecules. Accordingly, the ionized molecules can provide an indication of the vortex location.

Figure 8 is a flow diagram illustrating a process 500 for directing tracers into a vortical flow using one or more of the tracer directors described above. Process portion 501 includes generating a vortical flow in air adjacent to an aircraft. Process portion 502 includes directing a tracer from the aircraft into the vortical flow. The tracer can be directed into the vortical flow in a constant manner, as indicated at block 503, or in a time-varying manner, as indicated at block 504. One expected advantage associated with directing the tracer in a time-varying manner is that doing so may make the tracer more distinguishable from its environment. For example, if the surrounding environment provides a steady state background noise level picked up by the tracer detector, then a tracer that appears in a time varying manner is likely to stand out more distinctly against the background. If the surrounding environment provides a time-varying background noise level picked up by the tracer detector, then the tracer can be emitted in a manner that varies with time differently than does the background noise. Appropriate filtering techniques can then be used to segregate the desired signal (associated with the tracer) from the background noise (associated with the environment).

In process portion 505, a physical substance is directed into the vortical flow. The physical substance can include a gas (block 506) a gas-filled balloon or other type of envelope (block 507), chaff (block 508), or other substances (block 509). When a gas is directed into the vortical flow, it can be selected in accordance with several design criteria, including its compatibility with the environment and its buoyancy. For example, ammonia can be selected because it is lighter than air and, due to the centrifugal force produced in the vortex, is therefore expected to be forced toward the core or center of the vortex. As a result, ammonia (or another buoyant gas) is expected to remain with the vortex for a relatively long period of time, and therefore provide a relatively long-lived indication of the vortex's presence. Ammonia is also expected to have a relatively low environmental impact on the region over which is it dispersed.

Ammonia can be excited (e.g., via an ammonia maser or other microwave device) at a resonant frequency of 23.9 GHz, effectively producing a microwave fluorescence. In other embodiments, other devices may be used to excite the ammonia. In other embodiments, the ammonia can be excited at other frequencies around the resonant frequency (e.g., to accommodate line broadening). Ammonia (NH₃) has a strong dipole moment and can readily undergo a room temperature "nitrogen inversion," in which the nitrogen atom passes through the plane formed by the three hydrogen atoms, at an energy of 24.7 kJoule/mole which corresponds to the 23.9 GHz. resonant frequency. This resonant frequency in turn corresponds to a microwave radiation wavelength of 1.26 centimeters, which is close to the original K-band radar of 24 GHz. This is near but on the high side of the absorption band for water and therefore is expected to be sufficiently detectable or distinguishable from water molecules. Ammonia also has infrared absorption/emission bands at wavelengths of 2.9, 3.0, 6.146, and 10.53 microns. Accordingly, infrared techniques, rather than radar techniques, may alternatively be used to detect ammonia.

In other embodiments, the tracer can include a gas other than ammonia. For example, other gases which have been examined, but are expected not to be desirable as ammonia include hydrogen, helium, methane, water vapor, hydrogen fluoride, neon, acetylene, diborane, carbon monoxide, nitrogen, and ethylene. In still further embodiments, other gases or gas mixtures may be used. For example, individual gases that are generally undetectable when apart, but detectable when mixed, can be mixed and discharged from the aircraft as tracers.

If a gas-filled balloon is used as a tracer element (block 507), the gas may be selected to be buoyant, as described above, and the balloon may be selected to be biodegradable. In a particular embodiment, the gas may be selected not only to be buoyant, but also to chemically react with the balloon so as to hasten its degradation. Accordingly, microballoons may be filled with such a gas immediately prior to being deployed from the aircraft. Once deployed, the buoyant gas within the balloon will tend to keep balloon within the vortex core. The characteristics of the gas and the balloon can be selected using techniques known to those of ordinary skill in the relevant art to cause the balloon to dissolve after a selected time period (e.g., about one minute), allowing sufficient time to detect the balloon, and then the balloon can degrade completely or at least partially before reaching the ground. For example, the gas can include an acidic or other corrosive component.

If chaff is selected as the tracer element (block 508), it may be selected to be especially reflective at particular wavelengths, e.g., radar wavelengths. The chaff may also to be readily biodegradable, in the air and/or upon reaching the ground.

Other substances (block 509) may also be used as tracer elements. For example, very small carbon dioxide crystals can be directed into the vortical flow, where they can reflect radar energy. In another embodiment, the tracer elements can include crystals formed from local constituents. For example, the crystals can be formed from ambient water vapor and/or water vapor present in the engine exhaust. These crystals can form contrails or contrail-like structures that are detectable visually or by other detectors. In still another embodiment, the tracer elements can be self-powered (e.g., with a battery) and can emit radio signals, or the elements can receive radio signals (or signals at other wavelengths) and reemit radiation which is then detected. Accordingly, these elements can operate in the manner of self-powered or stimulated RFID devices. These elements may be selected to be buoyant compared to air molecules, and readily biodegradable. Buoyancy can be increased by adding a lighter-than-air gas to the tracer, or by adding a parachute or similar device. Micro- or nano-particles can be formed into 3-D shapes, with a bonding agent that allows the particles to decompose rapidly in the presence of water vapor or sunlight. Suitable water-soluble agents and UV-sensitive agents are well known to those of ordinary skill in the relevant art.

Optionally, energy can be added to the tracer for increased detectability (block 510). For example, if the tracer in its normal state is not highly detectable, energy can be added to the tracer prior to release from the aircraft (block 511). Energy can be added to the tracer after release (block 512), either in addition to or in lieu of adding energy prior to release. For example, if the tracer emits energy over such a short time period that it is not easily detected, then energy can be added to the tracer after it has been released. If in some instances it is easier to add energy to the tracer after it has been released than before it has been released, a similar process can be used. In a particular embodiment, ammonia may be excited by a maser prior to release. If, after release, the ammonia emits energy too quickly to be readily detected by an aircraft or ground-based detector, then energy may be added to the ammonia in a post-release process to increase the chances for detecting this tracer element. Energy may be added to the tracers either from an airborne energy source (block 513), e.g., an energy source carried by the same aircraft as carries the tracer, or from a ground-based energy source (block 514), or both.

As discussed initially with reference to Figure 5, an alternative approach to directing a physical substance into the vortical flow (process portion 505) includes directing energy into the flow without introducing a separate physical substance (process portion 515). For example, the air adjacent to the wing tip can be ionized by an air ionizer positioned at the wing tip (block 516). The charged ions produced by this process are expected to reflect energy, for example, radar energy, more effectively than nearby non-ionized molecules. Accordingly, a radar detector can be used to identify the ionized molecules. A tungsten electron emitter can be used for ionization, and any of the constituents of air can be ionized depending upon the energy provided. Other ionizers can include vacuum ultraviolet light ionizers, extreme ultraviolet light ionizers, and/or an X-ray emitter. Typical ionization techniques include thermionic emission, field emission, secondary electron emission, the photoelectric effect, cathode rays, charged particle radioactivity, and high-energy electromagnetic radiation. Any of these techniques may be used alone or in combination to generate the desired ions.

Alternatively, the electronic energy state of the molecule may be increased (block 517). Rather than charging the molecules in an ionization process, block 517 includes moving electrons of the molecule from a low or relatively low electronic energy state to a higher electronic energy state. As the electrons descend back to the low energy state, they emit radiation which is then detected by a ground- or air-based detector. In still other embodiments, other techniques for directing energy into the flow may be used (block 518).

Figure 9 illustrates a process 600 for detecting the presence of the tracers described above with reference to Figure 8. Process portion 601 includes detecting a characteristic associated with the presence of a tracer directed from an aircraft into vortical flow. As discussed above, the tracer can include a physical substance directed from the aircraft, energy directed from the aircraft (e.g., energy which is absorbed and re-emitted by the adjacent air), or a combination of a physical substance and energy. Detection techniques include radar (e.g., K-band for ammonia, or X-band for ionized air, or Ka band or W band for other substances) lidar, infrared, acoustic, optical or others. Process 600 can include detecting the characteristic from the ground (block 602) and/or from another aircraft (block 603). Optionally, the detection signal associated with detecting the characteristic can be analyzed (block 604). For example, if the tracers are ejected from the aircraft or otherwise created in a constant process, the signal can be analyzed in accordance with one technique (block 605). If the tracers are ejected or generated in a time varying manner, the signal can be analyzed in accordance with another technique (block 606).

In process portion 607, a response signal is generated, based at least in part upon the detection of the tracer identified in block 601. The response signal can be directed to another aircraft (block 608), or to the ground (block 610). If the response signal is directed to another aircraft, it can also (optionally) be directed to the ground (block 609). If the response signal is directed to the ground, it can also (optionally) be directed to another aircraft (block 611). The response signal can be made evident to a pilot and/or controller by visual, aural and/or other annunciation techniques.

Process portion 612 includes directing aircraft routing, based at least in part upon the response signal. For example, a following aircraft can be directed to evade a vortex (process portion 613). Alternatively (or additionally), the following distance for the following aircraft can be determined, based at least in part on the detection of the vortex (process portion 614). Alternatively (or additionally), the path of the leading aircraft (e.g., the aircraft associated with the detected vortex) can be changed (process portion 615).

Figure 10 is a partially schematic and compressed illustration of an aircraft 1110 approaching a ground-based detector 1131 located near an active runway 770. The detector 1131 can be aligned with an approach/departure axis 771 of the runway 770. For purposes of illustration, the detector 1131 is shown at the end of the runway 770, but it can also be located at other points along the axis 771. The detector 1131 can be configured in accordance with any of the foregoing embodiments above, and can accordingly include a radar detector, lidar detector, infrared detector, acoustic detector, optical detector, or other suitable instrument configured to detect a characteristic associated with the tracer emitted by the aircraft 1110. Unlike existing detectors, the detector 1131 shown in Figure 10 can have a detection axis 734 that is aligned with the approach/departure axis 771. This is so for at least the reason that the detector 1131 need not direct energy transverse to the vortexes 1111 (as is the case with Doppler-based detectors), but can instead detect the characteristics of the tracer in the vortexes 1111 from any angle. An expected advantage of this arrangement is that the number of detectors required to generate the information used to route aircraft can be significantly reduced when compared with existing arrangements. A further expected advantage of this arrangement is that the detector 1131 can more easily detect vortexes generated by aircraft that are off-axis relative to the detector 1131, without the need for a large network of detectors.

Furthermore, a ground-based radar (e.g., K-band radar) can be steered in azimuth and elevation to provide two dimensions of reference for the detected vortex. When used to receive energy pulses, range-gating can be used to provide a third or depth dimension. This arrangement can allow for three-dimensional visualization of the wake vortexes.

In still further embodiments, the ground-based detector 1131 can have other arrangements. For example, the detector 1131 can include a network of distributed, spaced-apart detector elements that have known locations relative to each other. Each of these detector elements can detect a characteristic of the tracer. Using phase-shift information and the known distances between detector elements, the system can establish a tomographic map or other representation of the vortex locations. In a particular embodiment, the detector elements can be relatively low-cost devices, located on existing platforms (e.g., cell phone towers) and can be networked using existing network facilities (e.g., a cell phone network).

One feature of at least some embodiments of the foregoing systems and methods is that they include actually detecting characteristics associated with vortexes or other vortical flow for aircraft on an individual basis. An expected advantage of this feature is that in many instances, the actual vortex characteristics are likely to be more benign than the "worst-case" characteristics that are conventionally assumed when determining aircraft routes and following distances. Accordingly, it is expected that aircraft following distances may be decreased because the determination of the following distances may be based on case-by-case, actual information, rather than an assumed worst case scenario. In other instances, the following aircraft may be directed to make minor course adjustments to avoid the vortex, without the need for a large following distance. As a result, in at least some cases, it is expected that embodiments of the foregoing systems and methods can increase airport capacity in the range of 50-100%.

Another feature of at least some of the foregoing embodiments is that the equipment for emitting a tracer and, optionally, the equipment for detecting the tracer, can be carried by one or more aircraft. An advantage of this arrangement is that vortexes can be detected in regions that are remote from airports, which is where such equipment is conventionally located. As a result, aircraft flying in remote areas can receive vortex information from aircraft up ahead, and can take appropriate action. Again, the information on which the action is based is expected to be more accurate than the assumption of a worst case scenario, and accordingly, it is expected that following distances can be reduced.

Still another feature of at least some of the foregoing embodiments is that the tracer is not visually detectable by an unaided human observer on the ground (e.g., with the naked eye), or to an unaided pilot in a following aircraft. Accordingly, these tracers are unlike visible smoke trails emitted by stunt aircraft, or smoke tracers used for flow visualization during research or experimental flights. An advantage of this feature is that in both crowded air terminal control areas and in locations remote from airports, the tracer is not expected to contribute to visual pollution, which can be an environmental issue and can create confusion to aircraft pilots.

The flowcharts and block diagrams in the Figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems which perform the specified functions or acts, or combinations of special purpose hardware and computer instructions.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

From the foregoing, it will be appreciated that specific embodiments have been described herein for purposes of illustration, but that various modifications may be made without deviating from the invention. For example, non-buoyant materials can be used where it is determined that viscous entertainment will keep the tracer in the vortex for a sufficient period of time. Certain aspects of the invention described in the context of particular embodiments may be combined or eliminated in other embodiments. For example, the overall system shown in Figure 4 can include more or fewer components and/or component combinations. Further, while advantages associated with certain embodiments of the invention have been described in the context of those embodiments, other embodiments may also exhibit such advantages, and not all embodiments need necessarily exhibit such advantages to fall within the scope of the invention.

## Claims

1. A method to predict a location, intensity and movement of wake vortexes, and to detect wake vortexes, comprising:
collecting (102) one or more ground-based measurements related to predicting the location, intensity and movement of wake vortexes;
collecting (104) one or more of airborne-based measurements related to predicting the location, intensity and movement of wake vortexes; and
integrating the ground-based and the airborne-based measurements to predict the location, intensity and movement of wake vortexes using a wake vortex prediction model selected from a plurality of wake vortex prediction models based on a group of inputs or parameters including the ground-based and the airborne-based measurements;
**characterized by** detecting wake vortexes by use of tracer material or substance emitted by an aircraft (1110) generating the wake vortexes, the step of detecting the wake vortexes comprising:
directing a tracer from a first aircraft (1110a) into a vortical flow (1111) generated by the first aircraft (1110a), the tracer being visually indistinguishable from its surroundings to an unaided observer on the ground or in a following aircraft (1110b) whilst the tracer is in the vortical flow (1111);
detecting a characteristic corresponding to the presence of the visually indistinguishable tracer directed into the vortical flow (1111); and
based at least in part on the detected characteristic, directing the flight of the first aircraft (1110a), or a second aircraft (1110b) following the first aircraft (1110a), or both.

2. The method of claim 1, further comprising distributing information related to prediction of the location, intensity and movement of wake vortexes to at least air traffic control and any aircraft possibly affected by the wake vortexes, the distributing information related to prediction of the location, intensity and movement of wake vortexes accomplished through an information management system in conjunction with a communications network.

3. The method of claim 1 or 2, wherein predicting the location, intensity and movement of wake vortexes from an aircraft generating the wake vortexes comprises:
determining a speed of the aircraft generating the wake vortexes;
determining a type of the aircraft generating the wake vortexes;
determining a configuration of the aircraft generating the wake vortexes;
determining or predicting local winds in the vicinity of the aircraft generating the wake vortexes; and
tracking a ground track of the aircraft generating the wake vortexes.

4. The method of any of claims 1-3, wherein predicting the location, intensity and movement of wake vortexes is performed on board an aircraft generating the wake vortexes, and wherein the method further comprises transmitting information related to predicting the location, intensity and movement of the wake vortexes to a following aircraft.

5. The method of any of claims 1-3, wherein predicting the location, intensity and movement of the wake vortexes from an aircraft generating the wake vortexes is performed at a ground station using information from the wake vortex generating aircraft, and wherein the method further comprises transmitting the information related to the location, intensity and movement of the wake vortexes to a following aircraft.

6. The method of any of claims 1-5, further comprising supplementing the measurements with space-based sensor information.

7. A system (200) to predict a location, intensity and movement of wake vortexes (210), and to detect wake vortexes (210) comprising:
a plurality of ground-based sensors (202, 204) to collect data related to predicting the location, intensity and movement of wake vortexes (210);
an information management system (221) and communications network (222) to receive airborne-based measurement data related to predicting the location, intensity and movement of wake cortexes (210) and to receive the data from the plurality of ground-based sensors (202, 204); and
a wake vortex prediction model (231), selected from a plurality of wake vortex prediction odels, to predict the location intensity and movement of the wake vortexes (210) from the plurality of ground based sensors (202, 204) and the airborne-based measurement data;
**characterized by** a vortex tracer system (234) including:
a tracer director (1120) positioned on a first aircraft (1110a) to direct a tracer into a vortical flow (1111) generated by the first aircraft (1110a), the tracer being visually indistinguishable from its surroundings to an unaided observer on the ground or in a following aircraft (1110b) whilst the tracer is in the vortical flow (1111);
a tracer detector (1130) for detecting a characteristic corresponding to the presence of the visually indistinguishable tracer directed into the vortical flow (1111); and
a communication network (1140) for directing the flight of the first aircraft (1110a), or a second aircraft (1110b) following the first aircraft, or both, based at least in part on the detected characteristic.

## Patentansprüche

1. Verfahren zum Bestimmen von Lage, Intensität und Bewegung von Wirbelschleppen und zum Erfassen von Wirbelschleppen, das Folgendes aufweist:
Aufnehmen (102) von einer oder mehreren bodengestützten Messungen, die sich auf ein Vorhersagen der Lage, Intensität und Bewegung von Wirbelschleppen beziehen;
Aufnehmen (104) von einer oder mehreren bordgestützten Messungen, die sich auf ein Vorhersagen der Lage, Intensität und Bewegung von Wirbelschleppen beziehen; und
Zusammenführen der bodengestützten und bordgestützten Messungen zum Vorhersagen der Lage, Intensität und Bewegung von Wirbelschleppen unter Verwendung eines Wirbelschleppen-Vorhersagemodells, das unter mehreren Wirbelschleppenvorhersagemodellen basierend auf einer Gruppe von die bodengestützten und bordgestützten Messungen einschließenden Eingaben oder Parametern ausgewählt ist;
**gekennzeichnet durch** ein Erfassen der Wirbelschleppen unter Verwendung eines Markierungssubstanzmaterials oder einer von einem die Wirbelschleppen erzeugenden Luftfahrzeug (1110) emittierten Substanz, wobei der Schritt zum Erfassen der Wirbelschleppen Folgendes aufweist:
Einleiten einer Markierungssubstanz von einem ersten Luftfahrzeug (1110a) in eine von dem ersten Luftfahrzeug (1110a) erzeugte Wirbelströmung (1111), wobei, solange sich die Markierungssubstanz in der Wirbelströmung (1111) befindet, die Markierungssubstanz für einen am Boden oder in einem nachfolgenden Luftfahrzeug (1110b) befindlichen Beobachter visuell ohne Hilfsmittel nicht von ihrer Umgebung zu unterscheiden ist;
Erfassen einer Besonderheit, die dem Vorhandensein der in die Wirbelströmung (1111) eingeleiteten, visuell nicht auszumachenden Markierungssubstanz entspricht; und
Steuern des Flugs des ersten Luftfahrzeugs (1110a) oder eines dem ersten Luftfahrzeug (1110a) folgenden zweiten Luftfahrzeugs (1110b) oder von beiden zumindest teilweise anhand der erfassten Besonderheit.

2. Verfahren nach Anspruch 1, das ferner ein Verteilen von auf die Vorhersage der Lage, Intensität und Bewegung von Wirbelschleppen bezogener Information an wenigstens eine Flugsicherung und jedes Luftfahrzeug umfasst, das möglicherweise von den Wirbelschleppen betroffen ist, wobei das Verteilen der auf die Vorhersage der Lage, Intensität und Bewegung von Wirbelschleppen bezogenen Information durch ein Informationsverwaltungssystem in Verbindung mit einem Übertragungsnetzwerk ausgeführt wird.

3. Verfahren nach Anspruch 1 oder 2, worin ein Vorhersagen der Lage, Intensität und Bewegung von Wirbelschleppen von einem die Wirbelschleppen erzeugenden Luftfahrzeug Folgendes aufweist:
Bestimmen einer Geschwindigkeit des die Wirbelschleppen erzeugenden Luftfahrzeugs;
Bestimmen eines Typs des die Wirbelschleppen erzeugenden Luftfahrzeugs;
Bestimmen einer Konfiguration des die Wirbelschleppen erzeugenden Luftfahrzeugs;
Bestimmen oder Vorhersagen von lokalen Winden in der Nähe des die Wirbelschleppen erzeugenden Luftfahrzeugs; und
Verfolgen eines Bodenwegs des die Wirbelschleppen erzeugenden Luftfahrzeugs.

4. Verfahren nach einem der Ansprüche 1 bis 3, worin das Vorhersagen der Lage, Intensität und Bewegung von Wirbelschleppen an Bord eines die Wirbelschleppen erzeugenden Luftfahrzeugs vorgenommen wird, und worin das Verfahren ferner ein Senden von auf die Vorhersage der Lage, Intensität und Bewegung von Wirbelschleppen bezogener Information an ein nachfolgendes Luftfahrzeug umfasst.

5. Verfahren nach einem der Ansprüche 1 bis 3, worin das Vorhersagen der Lage, Intensität und Bewegung von Wirbelschleppen von einem die Wirbelschleppen erzeugenden Luftfahrzeug an einer Bodenstation unter Verwendung von Informationen von dem die Wirbelschleppen erzeugenden Luftfahrzeug vorgenommen wird, und worin das Verfahren ferner ein Senden der auf die Vorhersage der Lage, Intensität und Bewegung von Wirbelschleppen bezogenen Information an ein nachfolgendes Luftfahrzeug umfasst.

6. Verfahren nach einem der Ansprüche 1 bis 5, das ferner ein Ergänzen der Messungen mit einer raumgestützten Sensorinformation umfasst.

7. System (200) zum Bestimmen von Lage, Intensität und Bewegung von Wirbelschleppen (210) und zum Erfassen von Wirbelschleppen (210, das Folgendes aufweist:
mehrere bodengestützte Sensoren (202, 204), um Daten aufzunehmen, die sich auf ein Vorhersagen der Lage, Intensität und Bewegung von Wirbelschleppen (210) beziehen;
ein Informationsverwaltungssystem (221) und ein Übertragungsnetzwerk (222), um auf die Vorhersage der Lage, Intensität und Bewegung von Wirbelschleppen (210) bezogene bordgestützte Messdaten zu empfangen, und um die Daten von den mehreren bodengestützten Sensoren (202, 204) zu empfangen; und
ein Wirbelschleppenvorhersagemodell (231), das unter mehreren Wirbelschleppenvorhersagemodellen ausgewählt ist, um aus den mehreren bodengestützten Sensoren (202, 204) und den bordgestützten Messdaten die Lage, Intensität und Bewegung von Wirbelschleppen (210) vorherzusagen.
**gekennzeichnet durch** ein Wirbelmarkierungssystem (234), das Folgendes aufweist:
einen Markierungssubstanzeinleiter (1120), der an einem ersten Luftfahrzeug (1110a) angeordnet ist, um eine Markierungssubstanz in eine von dem ersten Luftfahrzeug (1110a) erzeugte Wirbelströmung (1111) einzuleiten, wobei, solange sich die Markierungssubstanz in der Wirbelströmung (1111) befindet, die Markierungssubstanz für einen am Boden oder in einem nachfolgenden Luftfahrzeug (1110b) befindlichen Beobachter visuell ohne Hilfsmittel nicht von ihrer Umgebung zu unterscheiden ist;
einen Markierungssubstanzdetektor (1130) zum Erfassen einer Besonderheit, die dem Vorhandensein der in die Wirbelströmung (1111) eingeleiteten, visuell nicht auszumachenden Markierungssubstanz entspricht; und
ein Übertragungsnetzwerk (1140) zum Steuern des Flugs des ersten Luftfahrzeugs (111 0a) oder eines dem ersten Luftfahrzeug folgenden zweiten Luftfahrzeugs (1110b) oder von beiden zumindest teilweise anhand der erfassten Besonderheit.

## Revendications

1. Procédé de prédiction d'un emplacement, d'une intensité et d'un mouvement de turbulences de sillage et pour détecter des turbulences de sillage, comprenant:
collecter (102) une ou plusieurs mesures basées au sol liées à la prédiction de l'emplacement, de l'intensité et du mouvement des turbulences de sillage;
collecter (104) une ou plusieurs mesures basées dans l'air liées à la prédiction de l'emplacement, de l'intensité et du mouvement des turbulences de sillage; et
intégrer les mesures basées sur le sol et basées dans l'air pour prédire l'emplacement, l'intensité et le déplacement des turbulences de sillage en utilisant un modèle de prédiction de turbulences de sillage sélectionné parmi une pluralité de modèles de prédiction de turbulences de sillage basé sur un groupe d'entrée ou de paramètres incluant les mesures basées sur le sol et basées dans l'air;
**caractérisé par** la détection des turbulences de sillage en utilisant un matériau ou substance traceur émis par un aéronef (1110) produisant les turbulences de sillage, l'étape de la détection des turbulences de sillage comprenant:
diriger un traceur d'un premier aéronef (1110a) dans un écoulement turbulent (1111) produit par le premier aéronef (1110a), le traceur ne pouvant visuellement pas être distingué de son environnement par un observateur non aidé sur le sol ou dans un aéronef suivant (1110b) pendant que le traceur est dans l'écoulement tourbillonnant (1111);
détecter une caractéristique correspondant à la présence du traceur ne pouvant pas être distingué visuellement dirigé dans l'écoulement tourbillonnaire (1111); et
basé au moins en partie sur la caractéristique détectée, diriger le vol du premier aéronef (1110a) ou d'un deuxième aéronef (1110b) suivant le premier aéronef (1110a) ou les deux.

2. Procédé selon la revendication 1, comprenant en outre la distribution d'informations liées à la prédiction de l'emplacement, de l'intensité et du mouvement de turbulences de sillage à au moins le contrôle du trafic aérien et tout aéronef éventuellement affecté par les turbulences de sillage, l'information de distribution étant liée à la prédiction de l'emplacement, de l'intensité et du déplacement des turbulences de sillage accomplie par un système de gestion d'information conjointement avec un réseau de communication.

3. Procédé selon la revendication 1 ou 2, dans lequel la prédiction de l'emplacement, de l'intensité et du déplacement des turbulences de sillage d'un aéronef produisant les turbulences de sillage comprend:
déterminer une vitesse de l'aéronef produisant les turbulences de sillage;
déterminer un type d'aéronef produisant les turbulences de sillage;
déterminer une configuration de l'aéronef produisant les turbulences de sillage;
déterminer ou prédire des vents locaux au voisinage de l'aéronef produisant les turbulences de sillage; et
suivre une trajectoire au sol de l'aéronef produisant les turbulences de sillage.

4. Procédé selon l'une quelconque des revendications 1 à 3, dans lequel la prédiction de l'emplacement, de l'intensité et du déplacement des turbulences de sillage est exécutée à bord d'un aéronef produisant les turbulences de sillage, et où le procédé comprend en outre la transmission d'informations liées à la prédiction de l'emplacement, de l'intensité et du déplacement des turbulences de sillage d'un aéronef suivant.

5. Procédé selon l'une quelconque des revendications 1 à 3, dans lequel la prédiction de l'emplacement, de l'intensité et du déplacement des turbulences de sillage d'un aéronef produisant les turbulences de sillage est exécutée à une station au sol en utilisant les informations de l'aéronef produisant les turbulences de sillage, et où le procédé comprend en outre la transmission des informations liées à l'emplacement, à l'intensité et au déplacement des turbulences de sillage à un aéronef suivant.

6. Procédé selon l'une quelconque des revendications 1 à 5, comprenant en outre la complétion des mesures avec des informations de capteur basées dans l'espace.

7. Système (200) pour la prédiction d'un emplacement, d'une intensité et d'un déplacement de turbulences de sillage (210), et pour détecter des turbulences de sillage (210), comprenant:
une pluralité de capteurs basée au sol (202, 204) pour recueillir des données liées à la prédiction de l'emplacement, de l'intensité et du déplacement des turbulences de sillage (210);
un système de gestion d'informations (221) et un réseau de communication (222) pour recevoir des données de mesure basées dans l'air liées à la prédiction de l'emplacement, de l'intensité et du déplacement des turbulences de sillage (210) et pour recevoir les données de la pluralité de capteurs basée au sol (202, 204); et
un modèle de prédiction de turbulences de sillage (231) sélectionné parmi une pluralité de modèles de prédiction de turbulences de sillage pour prédire l'emplacement, l'intensité et le déplacement des turbulences de sillage (210) de la pluralité de capteurs basés sur le sol (202, 204) et les données de mesure basées dans l'air;
**caractérisé par** un système traceur de turbulences (234) incluant:
un directeur traceur (1120) positionné sur un premier aéronef (1110a) pour diriger un traceur dans un écoulement tourbillonnaire (1111) produit par le premier aéronef (1110a), le traceur ne pouvant pas être distingué visuellement de son environnement par un observateur non aidé sur le sol ou dans un aéronef suivant (1110b) pendant que le traceur se trouve dans l'écoulement vertical (1111);
un détecteur de traceur (1130) pour détecter une caractéristique correspondant à la présence du tracteur ne pouvant visuellement pas être distingué dirigé dans l'écoulement tourbillonnaire (1111); et
un réseau de communication (1140) pour diriger le vol du premier aéronef (1110a) ou d'un deuxième aéronef (1110b) suivant le premier aéronef, ou les deux, sur la base d'au moins en partie de la caractéristique détectée.
